# EUROPEAN PATENT SPECIFICATION

(11) **EP 0 772 967 B1**
(45) Date of publication and mention of the grant of the patent: **03.05.2000**
(21) Application number: 96203061.5
(22) Date of filing: 04.11.1996
(51) Int. Cl.: A01D 43/10

(54) **Mower-conditioner**
Mäh- und Konditionierungsvorrichtung
Faucheuse-conditionneuse

(30) Priority: 07.11.1995 NL 1001586
(43) Date of publication of application: 14.05.1997
(73) Proprietor: MAASLAND N.V., 3155 PD Maasland (NL)
(72) Inventor: Koorn, Maarten, 3123 CP Schiedam (NL)
(74) Representative: Corten, Maurice Jean F.M.

(56) References cited:
- EP-A- 0 155 063
- EP-A- 0 682 859
- WO-A-90/12492
- DE-A- 4 301 821
- FR-A- 2 328 386
- NL-A- 8 701 155

## Description

The present invention relates to a mowing machine comprising a mowing unit and a crushing member, as well as adjusting means, by means of which one or more crushing characteristics can be adjusted.

Such a mowing machine is known from e.g. DE-A1-43 01 821.

In practice, it happens that the thickness and/or the length and/or the quantity and/or the type of the crop to be crushed in a mowing machine varies. For example, when long crop is mowed, the flow of crop towards the crushing member will increase, which may entail that the crop is wound around the crushing member and/or is insufficiently treated by the crushing elements, while there is a reasonable risk that the crushing member gets blocked. The extent to which the crushing member is loaded during operation thereby increases. From the aforementioned document there is known a construction in which, in order to obviate this drawback, the mutual position of the crushing member and the mowing unit is adjustable.

When, prior to putting the machine into operation, the crushing characteristics of the machine are adjusted so as to be attuned to the conditions adapted to the crop, nevertheless, during operation, the problem may occur that the crushing member gets blocked and consequently gets overloaded. The adjustment may have been assessed wrongly or the quantity of crop may be different in various parts of the plot to be treated. In order still to obtain a good function of the machine, the latter, in accordance with the invention, is characterized in that there is available at least one sensor, by means of which the extent to which the crushing member is loaded during operation is recorded, which sensor supplies one or more control signals to the above-mentioned adjusting means for the automatic adjustment of the above-mentioned crushing characteristics. In other words, depending on the extent to which the crushing member is loaded, the crushing characteristics of the crushing member and the mowing unit are automatically adjusted. The adjusting means for adjusting these crushing characteristics can be suitable for adjusting the mutual position of the crushing member and the mowing unit and/or for varying the number of revolutions of the crushing member and/or for adjusting the size of the crop channel, etc. In other words, the crushing characteristics can relate to the relative position, in particular the distance, between the crushing member and the mowing unit, as well as to the intensity of the crushing proper, in particular by means of the number of revolutions of the crushing member and the size of the crop channel.

For a better understanding of the invention and to show how the same may be carried into effect, reference will now be made, by way of example, to two embodiments shown in the accompanying drawing.

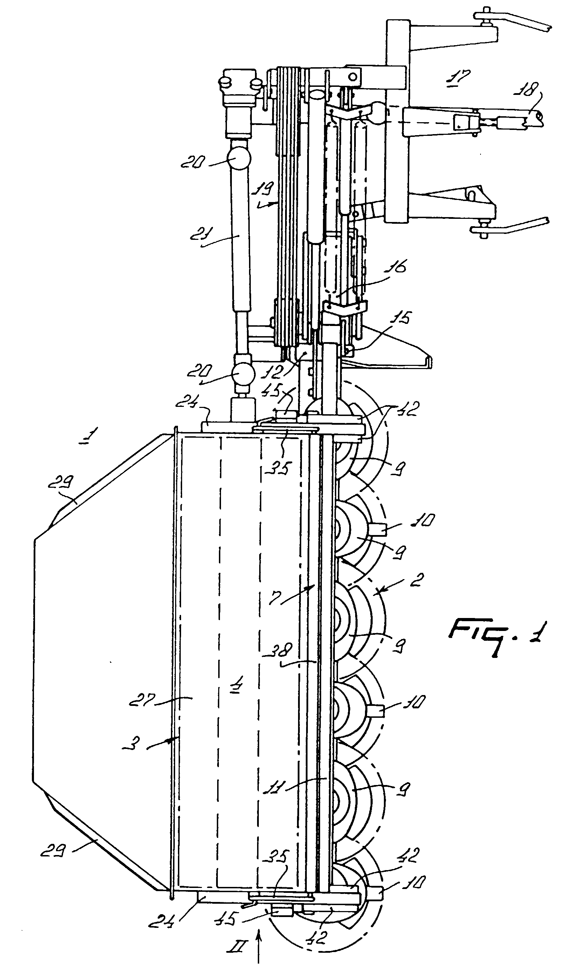

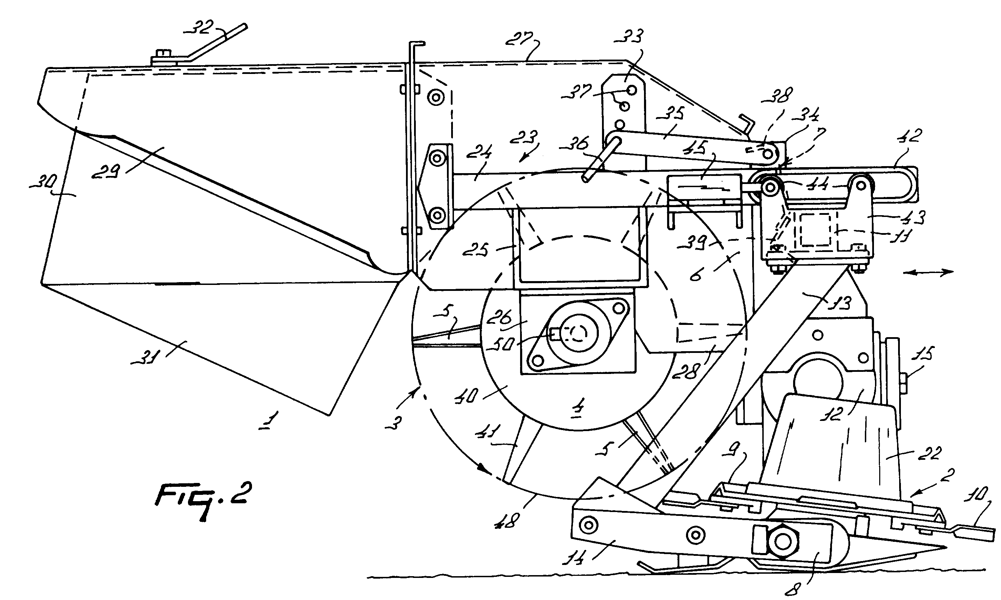

Figure 1 shows, in plan view, the mowing machine according to the invention;

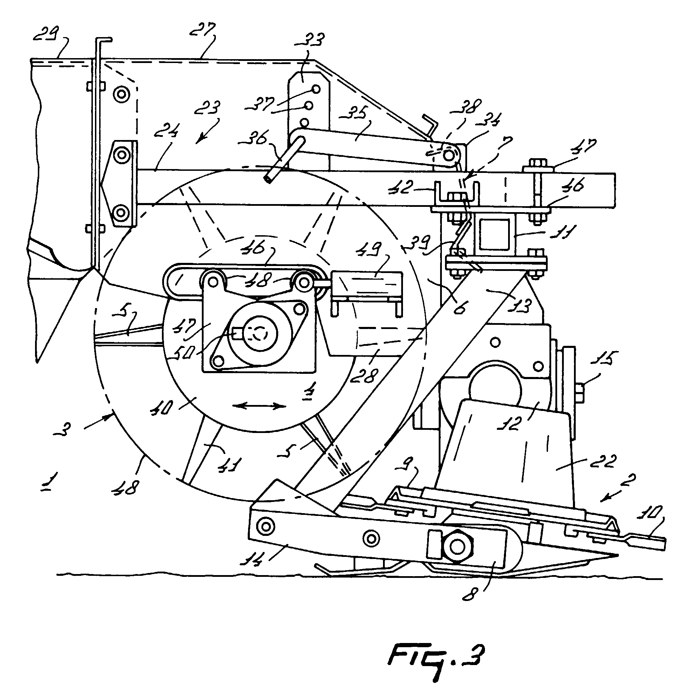

Figure 2 shows a side view of the mowing machine shown in Figure 1, whereby the mowing unit is movable, and
Figure 3 shows a side view of a version of the mowing machine shown in Figure 1, whereby the crushing member is movable.

The mowing machine 1, shown in the figures, comprises a mowing unit 2 and a crushing member 3 including a rotor 4 and crushing elements 5, as well as an element 7 constituting together with said crushing member 3 a crop channel 6.

In the embodiment shown, the mowing unit 2 is composed of a cutter bar 8 including six mowing discs 9 provided with mowing knives 10, pivotable thereabove about vertical shafts. Above the cutter bar 8 and parallel thereto, there is disposed a carrier beam 11. The connection between the cutter bar 8 and the carrier beam 11 is constituted at one end by a gear box 12 and at the other end by a supporting element 13, extending obliquely rearwards and downwards from the carrier beam 11, and a substantially horizontally extending connecting element 14, connected with said supporting element near the lower end thereof and also connected with the cutter bar 8.

The mowing machine is pivotably connected, in a customary manner, about an approximately horizontal pivot shaft 15, which, in its operative position, extends in the direction of travel, with a supporting arm 16 including a carrier frame 17, by means of which the mowing machine can be coupled to a three-point lifting hitch of a tractor or similar. The drive of the mowing machine takes place from a power take-off shaft 18 of a (non-shown) tractor, via different transmission members in a gear box 12, connected with the supporting arm 16, from which the mowing unit 2 is driven by means of a belt transmission 19 and the different transmission members in the gear box 12, and the crushing member 3 is driven by means of an intermediary shaft 21 provided with universal joints 20.

The outer mowing disc, at the side where the elements 13 and 14 constitute the connection between the cutter bar 8 and the carrier beam 11, is provided with a hat-shaped crop guide member 22.

A frame 23, constituted by supporting beams 24, a bracket 25 fixed below each one thereof, and an angle plate 26 fixed below said bracket, is connected with the carrier beam 11. The crushing member 3 is pivotably disposed between the angle plates 26. To the frame 23 there are additionally fastened top plate elements 27 and side plate elements 28 and 29, whereby the rearmost side plate elements 29 extend inwardly in rearward direction and are outwardly bent at their lower sides. At the inside of the side plate elements 29, there are available further side plates 30, which have at their lower sides a portion 31 extending inwardly and which, by means of a handle 32, can be moved further inwardly in order to obtain a required swath definition.

Furthermore, a first support 33 and a second support 34 are fixed to the supporting beams 24. By means of a shaft 36 and apertures 37, a connecting strip 35, pivotable in the second support 34, can be fixed in the first support 33 in such a way that the position of this connecting element 35, and consequently that of the strip 38 fixed thereto including the beater bar 39 fixed to said strip, extending in the longitudinal direction of the crushing member 3, determine the required size of the crop channel 6.

The rotor 4 of the crushing member 3 comprises a cylindrical carrier 40, on which the crushing elements 5 are disposed so as to be staggered relative to each other. The crushing elements 5 are tapering, have an I-shaped profile and project outwardly from the roller. The outer crushing elements 41 on both sides of the cylindrical roller 40 are flat, tapering and also project outwardly from the roller. As a result, the outer crushing elements are dagger-shaped and are preferably made of a flat strip of spring steel having a thickness of approximately 3 mm. Seen in plan view, the outer crushing elements 41 are located at a distance of approximately one cm from the side plate elements 28. Because, during operation, the dagger-shaped outer flat crushing elements 41 move relatively close along the side plate elements 28, material to be crushed, that has settled on said side plate elements 28 or has gathered in the angles of the crop channel 6, is cut up. As the crop cut up is wound less easily and can be better discharged, it is avoided that the rotor 4 runs roughly and the crop channel 6 and possibly the rotor 4 are blocked up with crop. The application of a relatively thin strip of spring steel for the outer crushing elements 41 has the advantage that the crushing elements 41, seen in the direction of rotation of the rotor 4, are relatively stiff, while the crushing elements 41, in a direction perpendicular to the direction of rotation of the rotor 4, on the contrary, can easily deflect and spring back. The latter phenomenon may occur when, for example, undesired objects, such as a piece of wood or a stone, get into the rotor 4. It will be obvious, that also more than two dragger-shaped crushing elements 41 can be disposed on the cylindrical carrier 40, and that the crushing elements 41 can be made of an other material, having characteristics identical to those of spring steel, such as synthetic material.

The frame 23, in which the crushing member 3 is pivotably suspended, can be moved relative to the cutter bar 8. For that purpose, the two supporting beams 24 comprise near their front side a guide means 42, and the mowing unit 2 can reciprocate in said guide means 42 by means of supports 43, provided at the ends of the carrier beam 11, and rollers 44 fastened thereto. This reciprocating movement can be achieved by means of adjusting means, in particular a control cylinder 45, fastened to a supporting beam 24, at one or both sides of the machine. Upon displacing the mowing unit 2, the mutual positioning of the crushing member 3 relative to the beater bar 39 remains unchanged. Instead of displacing the mowing unit 2, also the crushing member 4 can be displaced; this situation is shown in Figure 3. However, thereby the mutual positioning of the crushing member 3 relative to the beater bar 39 does change and consequently the size of the crop channel 6 changes as well. In the embodiment of Figure 3, there is fitted a guide means 46 to each of the side plate elements 28 at the inside of the machine. In this embodiment, the crushing member 3 is not directly bearing-supported in the side plate elements 28, but in supports 47, which, by means of rollers 48, can reciprocate in the guide means 46. This reciprocating movement can be achieved by means of adjusting means, in particular a control cylinder 49, fastened to a side plate element 28, at one or both sides of the machine.

As shown in both embodiments, the crushing member 4 is provided with a sensor 50, by means of which the extent to which the crushing member is loaded is determined by the flow of crop conducted through. The control cylinders 45, 49 respectively, shown in both embodiments, are controlled from said sensor 50, by means of a control signal supplied by same. At a relatively large flow of crop, the crushing member 3 is loaded to a greater extent than at a relatively small flow of crop, while the distance between the mowing unit 2 and the crushing member 3 will have to be greater. By means of this sensor 50 and the control cylinders 45, 49 respectively controlled thereby, there is obtained an automatic adjustment of the distance between the mowing unit 2 and the crushing member 3. The sensor 50 can be constituted by various types of sensors; there can be used force meters i.e. moment meters, possibly based on the function of strain gauges, disposed, at the appropriate places, on the crushing member. Especially due to the drive of the crushing member 3 from one lateral side of the machine, there will occur a clearly perceptible torsion in the shaft of the crushing member. Furthermore, there can be used revolution counters, provided, of course, that same are sufficiently accurate to be able to record relatively small variations in the number of revolutions.

Besides by the automatic adjustment of the mutual distance between the crushing member 4 and the mowing unit 2, as described above, the crushing characteristics of the machine can also be adjusted by the application of adjusting means suitable for adjusting the crushing intensity. It is possible, for example, to adjust the crushing intensity by means of a unit for varying the number of revolutions of the crushing member. Depending on the crop conditions, at a specific number of revolutions, it will be possible to obtain an optimal crushing of the crop. Of course, the latter unit will then be controlled by control signals supplied by the sensor 50. An other possibility consists in that the adjusting means are constituted by a unit for adjusting the size of the crop channel. Actually, in the above described embodiment, this can be achieved by the automatic adjustment of the strip 38 including the beater bar 39. The shown manual adjustment by means of the shaft 36 and the support 33 provided with apertures 37 can be replaced by a control cylinder, controlled by the sensor 50, for adjusting the position of the connecting element 35 and consequently that of the strip 38 including the beater bar 39. Of course, combinations of the here described adjusting means are possible as well.

## Claims

1. A mowing machine (1) comprising a mowing unit (2) and a crushing member (3), as well as adjusting means (45, 49), by means of which one or more crushing characteristics can be adjusted, characterized in that there is available at least one sensor (50), by means of which the extent to which the crushing member (3) is loaded during operation is recorded, which sensor (50) supplies one or more control signals to said adjusting means (45, 49) for the automatic adjustment of said crushing characteristics.

2. A mowing machine (1) as claimed in claim 1, characterized in that the adjusting means (45, 49) are suitable for adjusting the mutual position of the crushing member (3) and the mowing unit (2), and the sensor (50) supplies one or more control signals to said adjusting means (45, 49) for the automatic adjustment of said position.

3. A mowing machine (1) as claimed in claim 2, characterized in that said machine comprises a frame (23), and the adjusting means (45) are active between the frame (23) and the mowing unit (2).

4. A mowing machine (1) as claimed in claim 3, characterized in that, at both sides of the machine, the frame (23) is provided with a guide means (42) in which, by means of rollers (44), the mowing unit (2) is movable.

5. A mowing machine (1) as claimed in claim 4, characterized in that the mowing unit (2) is provided with a carrier beam (11), at the ends of which there are disposed supports (43), supporting the rollers (44).

6. A mowing machine (1) as claimed in claim 5, characterized in that the adjusting means (45), on the one hand, are disposed on the frame (23) and, on the other hand, engage a support (43).

7. A mowing machine (1) as claimed in claim 2, characterized in that said machine is provided at both sides with side plate elements (28), and the crushing member (3) is movable in said side plate elements (28), and the adjusting means (49) are active between a side plate element (28) and the crushing member (3).

8. A mowing machine (1) as claimed in claim 7, characterized in that the side plate elements (28) are provided with a guide means (46), in which, by means of rollers (48), the crushing member (3) is movable.

9. A mowing machine (1) as claimed in claim 8, characterized in that the crushing member (3) is pivotably bearing-supported in supports (47) supporting the rollers (48).

10. A mowing machine (1) as claimed in claim 9, characterized in that the adjusting means (49), on the one hand, are disposed on a side plate element (28) and, on the other hand, engage a support (47).

11. A mowing machine (1) as claimed in any one of the preceding claims, characterized in that the sensor (50) is constituted by a force meter i.e. a moment meter disposed on the rotor (4) or the shaft of the rotor (4).

12. A mowing machine (1) as claimed in any one of the preceding claims, characterized in that the adjusting means are suitable for adjusting the crushing intensity of the crushing member (3), and the sensor (50) supplies one or more control signals to said adjusting means for the automatic adjustment of said crushing intensity.

13. A mowing machine (1) as claimed in claim 12, characterized in that the adjusting means are constituted by a unit for varying the number of revolutions of the crushing member (3).

14. A mowing machine (1) as claimed in claim 12, characterized in that the adjusting means are constituted by a unit for adjusting the size of the crop channel (6).

## Patentansprüche

1. Mähmaschine (1) mit einem Mähwerk (2) und einem Quetschglied (3) sowie mit Stellvorrichtungen (45, 49), mittels derer ein oder mehrere Quetsch-Charakteristika einstellbar sind,
dadurch gekennzeichnet, daß mindestens ein Sensor (50) vorhanden ist, mittels dessen der Grad der Belastung des Quetschgliedes (3) im Betrieb aufgezeichnet wird, wobei der Sensor (50) ein oder mehrere Steuersignale zur automatischen Einstellung der Quetsch-Charakteristika an die Stellvorrichtungen (45, 49) gibt.

2. Mähmaschine (1) nach Anspruch 1,
dadurch gekennzeichnet, daß mittels der Stellvorrichtungen (45, 49) die Position des Quetschgliedes (3) und des Mähwerkes (2) relativ zueinander einstellbar ist, und daß der Sensor (50) ein oder mehrere Steuersignale zur automatischen Einstellung dieser Position an die Stellvorrichtungen (45, 49) gibt.

3. Mähmaschine (1) nach Anspruch 2,
dadurch gekennzeichnet, daß die Maschine einen Rahmen (23) aufweist, und daß die Stellvorrichtung (45) zwischen dem Rahmen (23) und dem Mähwerk (2) wirksam ist.

4. Mähmaschine (1) nach Anspruch 3,
dadurch gekennzeichnet, daß der Rahmen (23) auf beiden Seiten der Maschine eine Führung (42) aufweist, in der das Mähwerk (2) mittels Rollen (44) bewegbar ist.

5. Mähmaschine (1) nach Anspruch 4,
dadurch gekennzeichnet, daß das Mähwerk (2) einen Tragbalken (11) aufweist, an dessen Enden die Rollen (44) abstützende Stützen (43) angeordnet sind.

6. Mähmaschine (1) nach Anspruch 5,
dadurch gekennzeichnet, daß die Stellvorrichtung (45) auf der einen Seite am Rahmen (23) angebracht ist und auf der anderen Seite mit einer Stütze (43) in Eingriff steht.

7. Mähmaschine (1) nach Anspruch 2,
dadurch gekennzeichnet, daß die Maschine auf beiden Seiten Seitenplattenelemente (28) aufweist, daß das Quetschglied (3) in den Seitenplattenelementen (28) bewegbar ist, und daß die Stellvorrichtung (49) zwischen einem Seitenplattenelement (28) und dem Quetschglied (3) wirksam ist.

8. Mähmaschine (1) nach Anspruch 7,
dadurch gekennzeichnet, daß die Seitenplattenelemente (28) eine Führung (46) aufweisen, in der das Quetschglied (3) mittels Rollen (48) bewegbar ist.

9. Mähmaschine (1) nach Anspruch 8,
dadurch gekennzeichnet, daß das Quetschglied (3) in die Rollen (48) abstützenden Stützen (47) drehbar gelagert und gehalten ist.

10. Mähmaschine (1) nach Anspruch 9,
dadurch gekennzeichnet, daß die Stellvorrichtung (49) auf der einen Seite an einem Seitenplattenelement (28) angebracht ist und auf der anderen Seite mit einer Stütze (47) in Eingriff steht.

11. Mähmaschine (1) nach einem der vorhergehenden Ansprüche,
dadurch gekennzeichnet, daß der Sensor (50) durch einen Kraftmesser, d. h. einen Momentmesser, gebildet ist, der am Rotor (4) oder an der Welle des Rotors (4) angeordnet ist.

12. Mähmaschine (1) nach einem der vorhergehenden Ansprüche,
dadurch gekennzeichnet, daß mittels der Stellvorrichtung die Quetschintensität des Quetschgliedes (3) einstellbar ist, und daß der Sensor (50) zur automatischen Einstellung der Quetschintensität ein oder mehrere Steuersignale an die Stellvorrichtung gibt.

13. Mähmaschine (1) nach Anspruch 12,
dadurch gekennzeichnet, daß die Stellvorrichtung durch eine Vorrichtung zur Änderung der Drehzahl des Quetschgliedes (3) gebildet ist.

14. Mähmaschine (1) nach Anspruch 12,
dadurch gekennzeichnet, daß die Stellvorrichtung durch eine Vorrichtung zur Einstellung der Größe des Mähgutkanals (6) gebildet ist.

## Revendications

1. Faucheuse (1) comportant une unité de fauchage (2) et un élément de broyage (3) ainsi que des moyens d'ajustement (45, 49), par l'intermédiaire desquels une ou plusieurs caractéristiques de broyage peuvent être ajustées, caractérisée en ce qu'au moins un détecteur (50) est disponible, par l'intermédiaire duquel la valeur sur laquelle l'élément de broyage (3) est chargé pendant l'opération est enregistrée, lequel détecteur (50) envoie un ou plusieurs signaux de commande auxdits moyens d'ajustement (45, 49) pour l'ajustement automatique desdites caractéristiques de broyage.

2. Faucheuse (1) selon la revendication 1, caractérisée en ce que les moyens d'ajustement (45, 49) sont adaptés pour ajuster la position mutuelle de l'élément de broyage (3) et de l'unité de fauchage (2), et le détecteur (50) envoie un ou plusieurs signaux de commande auxdits moyens d'ajustement (45, 49) pour l'ajustement automatique de ladite position.

3. Faucheuse (1) selon la revendication 2, caractérisée en ce que ladite machine comporte un châssis (23) et les moyens d'ajustement (45) sont actifs entre le châssis (23) et l'unité de fauchage (2).

4. Faucheuse (1) selon la revendication 3, caractérisée en ce que, sur les deux côtés de la machine, le châssis (23) est muni de moyens de guidage (42) dans lesquels, par l'intermédiaire de rouleaux (44), l'unité de fauchage (2) est mobile.

5. Faucheuse (1) selon la revendication 4, caractérisée en ce que l'unité de fauchage (2) est munie d'une poutre de support (11) aux extrémités de laquelle sont disposés des supports (43), supportant les rouleaux (44).

6. Faucheuse (1) selon la revendication 5, caractérisée en ce que les moyens d'ajustement (45), d'une part, sont disposés sur le châssis (23) et, d'autre part, sont en prise avec un support (43).

7. Faucheuse (1) selon la revendication 2, caractérisée en ce que ladite faucheuse est munie au niveau des deux côtés d'éléments formant plaque latérale (28), et l'élément de broyage (3) est mobile dans lesdits éléments formant plaque latérale (28), et les moyens d'ajustement (49) sont actifs entre un élément formant plaque latérale (28) et l'élément de broyage (3).

8. Faucheuse (1) selon la revendication 7, caractérisée en ce que les éléments formant plaque latérale (28) sont munis de moyens de guidage (46), dans lesquels, par l'intermédiaire de rouleaux (48), l'élément de broyage (3) est mobile.

9. Faucheuse (1) selon la revendication 8, caractérisée en ce que l'élément de broyage (3) est supporté sur palier de manière pivotante dans des supports (47) supportant les rouleaux (48).

10. Faucheuse (1) selon la revendication 9, caractérisée en ce que les moyens d'ajustement (49), d'une part, sont disposés sur un élément formant plaque latérale (28) et, d'autre part, sont en prise avec un support (47).

11. Faucheuse (1) selon l'une quelconque des revendications précédentes, caractérisée en ce que le détecteur (50) est constitué par un capteur de force c'est-à-dire un capteur de moment disposé sur le rotor (4) ou l'arbre du rotor (4).

12. Faucheuse (1) selon l'une quelconque des revendications précédentes, caractérisée en ce que les moyens d'ajustement sont adaptés pour ajuster l'intensité du broyage de l'élément de broyage (3), et le détecteur (50) envoie un ou plusieurs signaux de commande auxdits moyens d'ajustement pour l'ajustement automatique de ladite intensité de broyage.

13. Faucheuse (1) selon la revendication 12, caractérisée en ce que les moyens d'ajustement sont constitués par une unité destinée à faire varier le nombre de tours par le nombre de tours de l'élément de broyage (3).

14. Faucheuse (1) selon la revendication 12, caractérisée en ce que les moyens d'ajustement sont constitués par une unité destinée à ajuster la dimension du canal de récolte (6).
